# EUROPÄISCHE PATENTSCHRIFT

(11) **EP 4 326 616 B1**
(45) Veröffentlichungstag und Bekanntmachung des Hinweises auf die Patenterteilung: **12.08.2026**
(21) Anmeldenummer: 22725803.5
(22) Anmeldetag: 26.04.2022
(51) Int. Cl.: B64F 5/10, B64C 5/02, B64U 20/65, B64U 30/10

(54) **FLUGGERÄTGRUNDKÖRPER**
MAIN BODY OF AN AERIAL VEHICLE
CORPS PRINCIPAL DE VÉHICULE AÉRIEN

(30) Priorität: 26.04.2021 DE 102021110631
(43) Veröffentlichungstag der Anmeldung: 28.02.2024
(73) Patentinhaber: Wingcopter GmbH, 64331 Weiterstadt (DE)
(72) Erfinder: HESSELBARTH, Jonathan, 64283 Darmstadt (DE)
(74) Vertreter: Habermann Intellectual Property Partnerschaft von Patentanwälten mbB
(86) Internationale Anmeldenummer: PCT/EP2022/061071
(87) Internationale Veröffentlichungsnummer: WO 2022/229197

(56) Entgegenhaltungen:
- EP-A1- 3 599 174
- CN-A- 107 738 457
- US-A1- 2012 305 707
- US-A1- 2020 172 236
- US-B2- 7 699 261

## Beschreibung

Die Erfindung betrifft einen Fluggerätgrundkörper eines Fluggerätes aus faserverstärktem Verbundwerkstoff und ein Verfahren zur Herstellung des Fluggerätgrundkörpers, wobei der Fluggerätgrundkörper eine als länglichen Rumpf ausgebildete Tragestruktur aufweist, wobei ein aus zwei Flügeln bestehendes Flügelpaar seitlich an dem länglichen Rumpf angeordnet ist, wobei die Flügel so ausgebildet sind, dass bei einer Horizontalflugbewegung in eine zu einer Längsachse des Rumpfes parallelen Horizontalflugrichtung eine Auftriebskraft für das Fluggerät erzeugt wird, wobei an den Flügeln mehrere Aufnahmevorrichtungen für die Aufnahme von Antriebseinrichtungen ausgebildet sind, wobei der Fluggerätgrundkörper aus einer Oberschale und einer Unterschale gebildet ist, wobei die Oberschale und die Unterschale entlang einer gemeinsamen Verbindungsfläche miteinander verbunden sind, wobei an einem Heck des Rumpfes ein Leitwerk angeordnet ist und wobei das Leitwerk durch ein Leitwerkflächenpaar ausgebildet ist, wobei Leitflächen des Leitwerkflächenpaares in einer Horizontalflugrichtung V-förmig zueinander ausgerichtet sind.

Im Bereich der Luftfahrt werden Bauteile und Strukturbauteile von Fluggeräten häufig aus faserverstärkten Verbundwerkstoffen hergestellt, wobei darunter auch ein Faser-Kunststoff-Verbund fällt. Dabei werden mit faserverstärkten Verbundwerkstoffen in eine Kunststoffmatrix eingebettete Fasern bezeichnet. Im Bereich der Luftfahrt werden häufig beispielsweise kohlenstofffaserverstärkte Kunststoffe (kurz CFK) verwendet, wobei Kohlenstofffasern in eine Kunststoff-Matrix eingebettet sind. Die Matrix dient zur Verbindung der Fasern sowie zum Füllen der Zwischenräume zwischen den Fasern. Als Matrixwerkstoff wird häufig Epoxidharz verwendet, wobei auch Duroplaste oder auch Thermoplaste als Matrixwerkstoff eingesetzt werden. Kohlenstofffaserverstärkte Kunststoffe zeichnen sich durch eine geringe Masse bei gleichzeitig hoher Steifigkeit aus. Auch glasfaserverstärkte Kunststoffe, bei denen die in eine Kunststoffmatrix eingebetteten Faser aus Glasfaser gebildet sind, sind im Bereich der Luftfahrt anwendbar.

Ein aus kohlenstofffaserverstärken Kunststoffen hergestelltes Bauteil weist in der Regel sogenannte anisotrope Eigenschaften auf, wobei eine Festigkeit und eine Steifigkeit in Faserrichtung wesentlich höher ist als quer zur Faserrichtung. Um isotrope also richtungsunabhängige Eigenschaften herzustellen, können die Faserlagen so orientiert und angeordnet werden, dass diese in mehrere verschiedene Richtungen weisen. Außerdem sind durch die vorgegebene Anordnung und Ausrichtung von Faserlagen eine gewünschte Festigkeit und Steifigkeit in gewünschten Richtungen und Bauteilbereiche einstellbar.

Im Flugzeugbau wird das sogenannte Prepreg-Fertigungsverfahren eingesetzt, um Bauteile aus faserverstärkten Kunststoffen beziehungsweise aus einem Faser-Kunststoff-Verbund herzustellen. Bei diesem Fertigungsverfahren werden vorimprägnierte Gewebe beziehungsweise konfektionierte textile Halbzeuge in Kunstharze getränkt und lediglich bis zu einer leichten Verfestigung thermisch behandelt, so dass sie lagenweise handhabbar sind. Ein solches bahnförmiges beziehungsweise lagenförmiges Prepreg-Halbzeug weist in der Regel eine gewisse Haftfähigkeit auf ist somit gut in entsprechende Formwerkzeuge bzw. schichtweise aufeinander anzuordnen bis die gewünschte Bauteil-Form ausgebildet ist. Sind die gewünschten Lagen des Prepreg-Halbzeugs angeordnet, können sie (thermisch) ausgehärtet werden. Zum Aushärten dieser Prepreg-Bauteile kommen sogenannte Autoklaven zum Einsatz, in denen die Prepreg-Bauteile unter Überdruck von bis zu 10 bar und über mehrere Stunden bei Temperaturen von 120 °C bis zu 200 °C behandelt werden, wodurch eine vollständige Aushärtung der evakuierten Prepreg-Bauteile zu erreichen.

Im Flugzeugbau oder auch bei dem Bau von fernsteuerbaren Fluggeräten, wie beispielsweise Drohnen, werden Fluggerätgrundkörper häufig mittels unterschiedlicher Werkstoffe und Fertigungsverfahren hergestellt. Dabei werden häufig die hochbelasteten Tragestrukturen, wie der längliche Rumpf und die an dem länglichen Rumpf angeordneten Flügelpaare aus einem kohlenstofffaserverstärkten Kunststoff hergestellt, wobei für derartige großflächige Fluggerätkomponenten das Prepreg-Fertigungsverfahren eingesetzt wird. Da bei dem Prepreg-Fertigungsverfahren in der Regel Werkzeugformen mit den Prepreg-Halbzeugen ausgekleidet werden, können somit meist nur halbschalenförmige Teile eines Fluggerätgrundkörpers hergestellt werden. In der Regel wird eine Fluggerätgrundkörper somit in zwei Schalenhälften, in eine Oberschale und in eine Unterschale unterteilt. Die Oberschale und die Unterschale werden jeweils einzeln in ihrer jeweiligen Werkzeugform hergestellt. Die ausgehärteten Prepreg-Bauteile werden anschließend durch Abschneiden von überschüssigem, bei dem Auskleiden der Werkzeugform überstehenden Prepreg-Halbzeuge, in die gewünschte Form gebracht, sodass die zugeschnittenen Prepreg-Bauteile die Oberschale und die Unterschale bilden.

Um eine besonders stabile Verbindung zwischen den Flügeln und dem Rumpf herstellen zu können, werden die Flügel und die Oberschale oder die Unterschale des Rumpfes oft bereits in dem Prepreg-Fertigungsverfahren durch entsprechend angeordnete Prepreg-Halbzeuge zu einem Prepreg-Bauteil verbunden, sodass die Aushärtung zu einem monolithischen Bauteil erfolgt.

Auch Leitwerkkomponenten, wie Leitflächen werden mittels des Prepreg-Fertigungsverfahrens hergestellt. Dabei ist jedoch, je nach Formgebung und Anordnung der einzelnen Fluggerätkomponenten oder Leitwerkkomponenten eine Herstellung eines monolithischen Leitwerks nicht möglich. Vielmehr müssen die getrennt voneinander und einzeln aus faserverstärkten Kunststoffen hergestellte Fluggerätkomponenten oder Leitwerkkomponenten anschließend zu einem Fluggerätgrundkörper beziehungsweise zu einem Leitwerk zusammengesetzt werden. Dazu werden die Leitwerkkomponenten beispielsweise mit der Oberschale des Fluggerätgrundkörpers beziehungsweise des Rumpfes zusammengesetzt. Dabei erfolgt ein Zusammensetzen beispielsweise durch ein Fügeverfahren, wie beispielsweise Kleben, Nieten oder Verschrauben. Durch derartige Fügeverfahren erzeugten Fügestellen beziehungsweise Fügebereiche weisen in der Regel eine geringere Festigkeit im Vergleich zu der Festigkeit der Fluggerätkomponente auf. Des Weiteren weisen derartige Fügebereiche aufgrund einer lokalen Anhäufung von Klebstoff, Nieten oder Schrauben zur Herstellung der jeweiligen Fügeverbindung eine große Masse auf. Durch Verwendung einer großen Anzahl an Fügestellen und Fügebereichen steigt somit das Gesamtgewicht des Fluggeräts an, wodurch die Flugdauer beziehungsweise die Reichweite des Fluggeräts aufgrund des durch die vergrößerte Masse vergrößerten Leistungsbedarfs der Antriebseinheiten reduziert ist.

US 7 699 261 B2 offenbart ein unbemanntes Luftfahrzeug (UAV), das für Einsätze bei niedriger Geschwindigkeit, geringer Flughöhe und langer Einsatzdauer ausgelegt ist. Die Struktur des UAV ist so konfiguriert, dass sie im Wesentlichen unempfindlich gegenüber Beschuss mit leichten Handfeuerwaffen ist und zudem einen sehr geringen Radarquerschnitt aufweist. Das Luftfahrzeug ist modular aufgebaut, wobei insbesondere Hauptflügel und Leitwerksbaugruppe schnell und einfach vom Rumpf lösbar sind.

CN 107 738 457 A beschreibt ein integriertes Formgebungsverfahren für den Rumpf eines unbemannten Luftfahrzeugs (UAV). Als Ausgangsmaterialien werden Kohlefaser-Prepregs und Leichtschaum eingesetzt, die mittels einer Integral-Lagenaufbautechnik auf die Innenwände eines kombinierten Doppelnegativ-Formwerkzeugs aufgebracht werden. Anschließend erfolgt eine integrale Aushärtung und Formgebung durch ein Autoklavenverfahren.

US 2020/0172236 A1 offenbart ein Luftfahrzeug mit Senkrechtstart- und -landefähigkeit (VTOL). Das Luftfahrzeug umfasst einen Rumpf, ein Paar aerodynamische Tragflächen und mehrere schwenkbare am Rumpf gelagerte Rotoren, die zwischen einer im Wesentlichen vertikalen Stellung und einer im Wesentlichen horizontalen Stellung verstellbar sind. Die Tragflächen können modular ausgebildet und lösbar mit dem Rumpf verbunden sein, sodass ein Austausch gegen alternative Flügelpaare möglich ist.

Als Aufgabe der vorliegenden Erfindung wird es somit angesehen, ein besonders gewichtsreduziertes und gleichzeitig stabiles Fluggerät zur Verfügung zu stellen.

Diese Aufgabe wird dadurch gelöst, dass die Oberschale und die Unterschale jeweils einstückig hergestellt ist, und dass die Leitflächen unmittelbar an dem Heck angeordnet sind und in das Heck übergehen, sodass das Leitwerk entweder ein Bestandteil der Oberschale oder ein Bestandteil der Unterschale darstellt. Somit ist die Anzahl der Fügestellen gering, sodass ein besonders gewichtsreduziertes Fluggerät herstellbar ist. Auch sind aufgrund einer monolithischen Oberschale eine besonders große Steifigkeit und Festigkeit der Oberschale und des Fluggeräts herstellbar. Durch eine jeweils einstückige Fertigung der Oberschale und der Unterschale können die Außenseiten der Oberschale und die Unterschale so hergestellt werden, dass diese in Horizontalflugrichtung aerodynamische Außenflächenform aufweisen.

Dadurch, dass das Leitwerk entweder ein Bestandteil der Oberschale oder ein Bestandteil der Unterschale ist, kann auch das aus mehreren verschiedenen Leitwerkkomponenten bestehende Leitwerk aus einem Stück hergestellt werden. Aufgrund der dadurch geringen Anzahl an Fügestellen, ist ein besonders gewichtsreduziertes Fluggerät herstellbar. Für den Fall, dass das Leitwerk ein Bestandteil der Oberschale darstellt, weisen die Oberflächen der V-förmig zueinander ausgerichteten Leitflächen nach oben. Somit ist das Leitwerk einstückig mit der Oberschale herstellbar. Sofern das Leitwerk ein Bestandteil der Unterschale darstellt, weisen die Oberflächen der Leitflächen nach unten, sodass das Leitwerk einstückig mit der Unterschale herstellbar ist.

Um einen Fluggerätgrundkörper mit einer besonders hohen Festigkeit bei gleichzeitig geringem Gewicht herzustellen, ist in einer vorteilhaften Ausgestaltung der Erfindung vorgesehen, dass die Oberschale und die Unterschale aus einem Faser-Kunststoff-Verbund hergestellt sind. Vorteilhafterweise sind die Oberschale und die Unterschale aus einem kohlenstofffaserverstärkten Kunststoff hergestellt, welcher unter den Begriff des Faser-Kunststoff-Verbunds fällt. Im Vergleich zu anderen faserverstärkten Verbundwerkstoffen, wie beispielsweise glasfaserverstärkten Kunststoffen, weisen die kohlenstofffaserverstärkten Kunststoffe ein besonders geringes spezifisches Gewicht auf. Somit können die aus dem kohlenstofffaserverstärkten Kunststoff hergestellte Oberschale und/oder Unterschalte besonders leicht ausgestaltet werden, sodass ein besonders gewichtsreduzierter Fluggerätgrundkörper herstellbar ist.

Damit ein besonders gewichtsreduzierter Fluggerätgrundkörper hergestellt werden kann, ist in einer vorteilhaften Ausgestaltung des Fluggerätgrundkörpers vorgesehen, dass die Oberschale und die Unterschale so ausgestaltet sind und entlang der Verbindungsfläche miteinander in Verbindung bringbar sind, dass durch die Oberschale und durch die Unterschale ein Innenvolumen umschlossen wird, sodass der Fluggerätgrundkörper als Hohlkörper ausgestaltet ist. Vorteilhafterweise können in dem hohlkörperartigen Fluggerätgrundkörper die für den Betrieb des Fluggeräts notwendigen elektrischen und steuerungsrelevanten Gerätschaften untergebracht werden. Neben GPS-Empfängern, Funk-Sender, Funk-Empfängern, Kameras, Batterien oder Antriebsmotoren können auch Elektroleitungen innerhalb des Hohlkörpers untergebracht und gegenüber Umgebungseinflüssen wie Regen, Wind und Stößen geschützt werden.

Die eingangs gestellte Aufgabe wird auch durch ein Verfahren zur Herstellung eines Fluggerätgrundkörpers eines Fluggeräts gemäß den Ansprüchen 1 bis 4 gelöst, wobei der Fluggerätgrundkörper durch eine Oberschale und eine Unterschale gebildet wird, wobei in einem Laminiervorgang eine Formgebung der Oberschale und der Unterschale durch Formung und Anordnung von einer oder mehreren Lagen eines aushärtbaren Materials nachgebildet wird, wobei in einem anschließenden Aushärtvorgang die eine oder die mehreren Schichten durch Hinzugabe von Druck und Temperatur ausgehärtet werden, wodurch die Oberschale und die Unterschale gebildet werden. Vorteilhafterweise wird als aushärtbares Material die mit einem Imprägnierharz vorimprägnierten Prepreg-Halbzeuge verwendet, wobei diese Prepreg-Halbzeuge eine gewisse Haftfähigkeit und eine gewisse Formstabilität aufweisen, sodass eine Formgebung des aus den Prepreg-Halbzeugen gebildeten Prepreg-Bauteils erzeugt werden kann.

Damit eine Formgebung des Fluggerätgrundkörpers besonders schnell nachbildbar ist, ist in einer vorteilhaften Umsetzung des Erfindungsgedankens vorgesehen, dass die Formgebung der Oberschale und/oder der Unterschale durch Auskleiden einer Werkzeugform durch eine oder mehrere Lagen des aushärtbaren Materials erfolgt. Durch das Auskleiden der Werkzeugform ist die Form der Oberschale und/oder der Unterschale vorteilhafterweise reproduzierbar. Außerdem lassen sich die eine oder die mehreren Lagen des aushärtbaren Materials besonders gleichmäßig nebeneinander oder aufeinander anordnen, sodass eine besonders dünnwandige Oberschale und/oder Unterschale herstellbar sind und somit ein besonders gewichtsreduzierter Fluggerätgrundkörper beziehungsweise Fluggerät herstellbar ist.

In einer vorteilhaften Ausgestaltung der Erfindung ist vorgesehen, dass das Laminat aus einer oder mehreren Lagen eines Prepreg-Halbzeugs besteht. Somit kann während des Laminiervorgangs eine Dicke des Fluggerätgrundkörpers innerhalb unterschiedlicher Bereiche der Oberschale und/oder der Unterschale festgelegt werden.

Um sämtliche Bereiche der Werkzeugform vollständig und gleichmäßig auskleiden zu können, ist in einer vorteilhaften Ausgestaltung der Erfindung vorgesehen, dass die Prepreg-Halbzeuge einen vorgegebenen Zuschnitt aufweisen. Mit großen Zuschnitten können große Flächen der Werkzeugform besonders schnell ausgekleidet werden. Unter Verwendung von kleinen Zuschnitten können bestimmte Bereiche der Werkzeugform mit einer oder mehreren Lagen des Prepreg-Halbzeugs verstärkt werden, sodass eine gewünschte Steifigkeit und/oder Festigkeit des Fluggerätgrundkörpers herstellbar ist.

Um eine gewünschte Steifigkeit und/oder Festigkeit des Fluggerätgrundkörpers herzustellen, ist in einer vorteilhaften Ausgestaltung des erfindungsgemäßen Verfahrens vorgesehen, dass das Prepreg-Halbzeug innerhalb des Zuschnitts unterschiedliche Dicken aufweist. Außerdem können die Prepreg-Halbzeuge so vorbereitet sein, dass der Laminiervorgang zum Auskleiden der Werkzeugform mit den Prepreg-Halbzeugen besonders schnell erfolgen kann, da nur eine Lage des Prepreg-Halbzeugs verwendet werden muss, um die gewünschte Steifigkeit und/oder Festigkeit des Fluggerätgrundkörpers zu erreichen.

Um sämtliche Bereiche der Werkzeugform vollständig auskleiden zu können, ist in einer vorteilhaften Ausgestaltung der Erfindung vorgesehen, dass für festgelegte Bereiche der Oberschale und der Unterschale die Werkzeugform in dem Laminiervorgang das Laminat durch für die jeweiligen festgelegten Bereichen passende vorgegebenen Zuschnitte des Prepreg-Halbzeugs ausgekleidet wird. Somit können insbesondere Rundungen, Wölbungen oder Übergänge der Werkzeugform besonders gleichmäßig mit den Prepreg-Halbzeugen ausgekleidet werden. Somit ist eine besonders gleichmäßige Dicke des Fluggerätgrundkörpers herstellbar.

Für eine besonders gleichmäßige Aushärtung des aushärtbaren Materials, ist in einer vorteilhaften Ausgestaltung des Erfindungsgedankens vorgesehen, dass der Aushärtvorgang in einem Autoklaven durchgeführt wird. Erfindungsgemäß ist der Aushärtvorgang aber auch in einem konventionellen Ofen möglich und vorgesehen, wodurch ein geringer Aufwand für die Vorbereitung der in die Werkzeugform eingelegten Prepreg-Halbzeuge notwendig ist. Des Weiteren kann eine Aushärtung auch innerhalb beheizter Werzeugformen durchgeführt werden. Somit kann eine besonders schnelle und gleichmäßige Aushärtung des aushärtbaren Materials erfolgen.

Für eine besonders einfache Verbindung der Oberschale und Unterschale ist in einer vorteilhaften Ausgestaltung des Erfindungsgedankens vorgesehen, dass die Oberschale und die Unterschale in einem dem Aushärtvorgang nachgelagerten Fügevorgang mittels eines Fügeverfahrens miteinander verbunden werden. Vorteilhafterweise werden die Oberschale und die Unterschale mittels Kleben miteinander gefügt, wodurch eine durchgängige und gleichmäßige Verbindungfläche entsteht. Somit ist eine besonders gleichmäßige Steifigkeit und/oder Festigkeit des Fluggerätgrundkörpers herstellbar.

Um ein monolithisches Bauteil besonders einfach herzustellen, ist in einer vorteilhaften Umsetzung des Erfindungsgedankens vorgesehen, dass die Oberschale und die Unterschale in einem dem Aushärtvorgang vorgelagerten Fügevorgang in einem nicht ausgehärteten Zustand zusammengefügt werden. Dabei kann das Fügen der Oberschale mit der Unterschale durch eine thermische Entfestigung des aushärtbaren Materials in den gewünschten Verbindungsbereichen der Oberschale und/oder der Unterschale erfolgen, wobei die entfestigten Verbindungsbereiche miteinander in Anlage gebracht werden, sodass sich diese miteinander verbinden oder zumindest eine gewisse Haftverbindung eingehen. In dem nachgelagerten Aushärtvorgang wird eine feste ausgehärtete Verbindung der Oberschale und der Unterschale hergestellt

Bei einer vorteilhaften Ausgestaltung des erfindungsgemäßen Verfahrens ist vorgesehen, dass in dem Laminiervorgang die einen oder mehreren Lagen des aushärtbaren Materials der Oberschale und der Unterschale innerhalb eines Überlappungsbereichs miteinander in Anlage bringbar sind, sodass in dem Aushärtvorgang die Oberschale und die Unterschale sich zu einem monolithischen Fluggerätgrundkörper verbinden. Dabei wird innerhalb des Überlappungsbereichs eine Überlappung der einen oder mehreren Lagen des aushärtbaren Materials der Oberschale zu den einen oder mehreren Lagen des aushärtbaren Materials der Unterschale lediglich durch eine entsprechende Anordnung und Ausrichtung des aushärtbaren Materials hergestellt. Ein vorgelagerter oder nachgelagerter Fügevorgang ist nicht erforderlich. Zudem sind somit keine Fügestellen für die Verbindung der Oberschale und der Unterschale notwendig, sodass ein besonders gewichtsreduzierter Fluggerätgrundkörper herstellbar ist.

Weitere vorteilhafte Ausgestaltungen der Erfindung werden anhand von in den Zeichnungen dargestellten Ausführungsbeispielen erläutert. Es zeigen:
Figur 1 eine schematische Darstellung des Fluggerätgrundkörpers des Fluggeräts in einer perspektivischen Ansicht,
Figur 2 eine schematische Darstellung des aus der Oberschale und Unterschale bestehenden Fluggerätgrundkörpers in einer Schnittansicht entlang der in Figur 1 dargestellten Schnittlinie A-A,
Figur 3 eine schematische Darstellung eines Teilbereichs der Werkzeugform zur Herstellung der Oberschale mit in die Werkzeugform eingelegten Prepreg-Halbzeugen im Bereich des Leitwerks des Fluggerätgrundkörpers in einer Draufsicht und
Figur 4 eine schematische Darstellung der Werkzeugform mit in die Werkzeugform zur Herstellung der Oberschale eingelegten Prepreg-Halbzeugen im Bereich des Leitwerks des Fluggerätgrundkörpers in einer Schnittansicht entlang der in Figur 3 dargestellten Schnittlinie B-B.

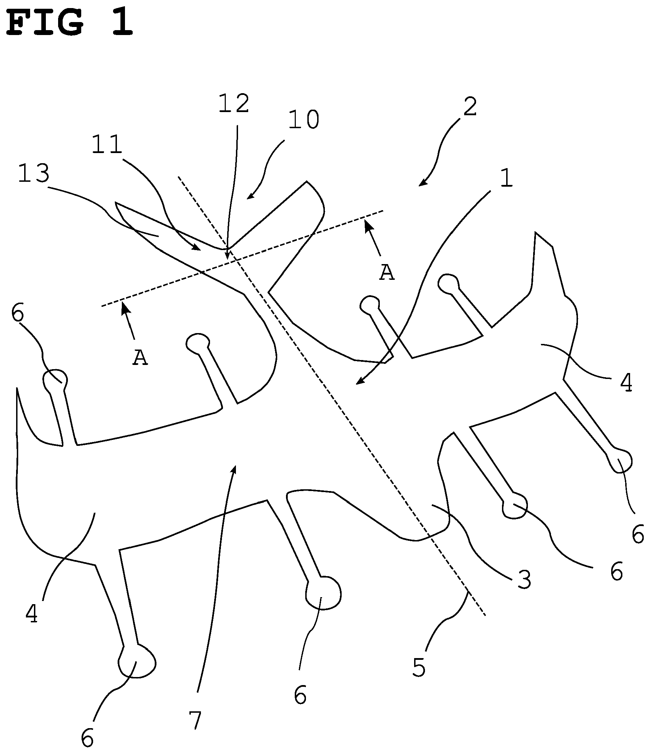

In Figur 1 ist eine schematische Darstellung eines Fluggerätgrundkörpers 1 des Fluggeräts 2 in einer perspektivischen Ansicht gezeigt. Der Fluggerätgrundkörper 1 ist aus kohlenstofffaserverstärktem Kunststoff hergestellt. Der Fluggerätgrundkörper 1 weist eine als länglichen Rumpf 3 ausgebildete Tragestruktur auf. Ein aus zwei Flügeln 4 bestehendes Flügelpaar ist seitlich an dem länglichen Rumpf 3 angeordnet. Die Flügel 4 sind so ausgebildet, dass bei einer Horizontalflugbewegung in eine zu einer Längsachse 5 des Rumpfes 3 parallelen Horizontalflugrichtung eine Auftriebskraft für das Fluggerät 2 erzeugt wird. An den Flügeln 4 sind mehrere Aufnahmevorrichtungen 6 für die Aufnahme von in Figur 1 nicht dargestellten Antriebseinrichtungen ausgebildet. Der Fluggerätgrundkörper 1 ist aus einer Oberschale 7 und aus einer in Figur 1 nicht dargestellten Unterschale 8 gebildet. Die Oberschale 7 und die Unterschale 8 sind entlang einer in Figur 1 nicht dargestellten gemeinsamen Verbindungsfläche 9 miteinander verbunden. An einem Heck 10 des Rumpfes 3 ein Leitwerk 11 vorliegt, das durch ein Leitwerkflächenpaar 12, bestehend aus Leitflächen 13, ausgebildet ist. Die Leitflächen 13 des Leitwerkflächenpaares 12 sind V-förmig zueinander ausgerichtet und sind Bestandteil der Oberschale 7.

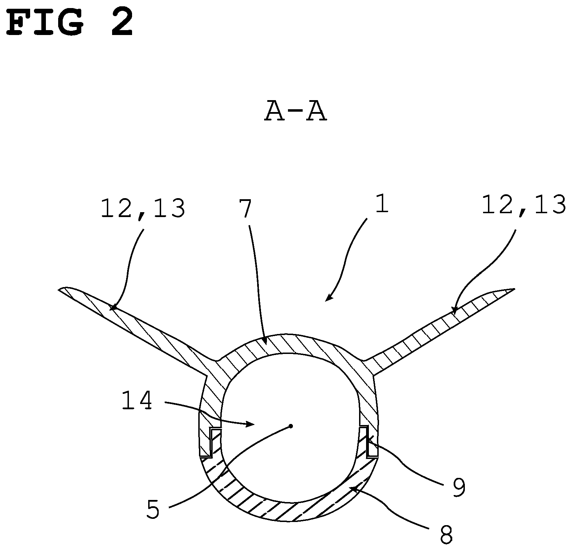

In Figur 2 ist eine schematische Darstellung des aus der Oberschale 7 und Unterschale 8 bestehenden Fluggerätgrundkörpers 1 in einer Schnittansicht entlang der in Figur 1 dargestellten Schnittlinie A-A gezeigt. Die Oberschale 7 und die Unterschale 8 sind entlang der gemeinsamen Verbindungsfläche 9 miteinander verbunden. Dabei sind die Oberschale 7 und die Unterschale 8 so ausgestaltet und entlang der Verbindungsfläche 9 miteinander verbunden, dass durch die Oberschale 7 und durch die Unterschale 8 ein Innenvolumen 14 umschlossen wird, sodass der Fluggerätgrundkörper 1 als Hohlkörper ausgestaltet ist. Die Leitflächen 13 des Leitwerkflächenpaares 12 sind V-förmig zueinander ausgerichtet und sind Bestandteil der Oberschale 7. In einem Fügevorgang werden die Oberschale 7 und die Unterschale 8 mittels eines Fügeverfahrens miteinander verbunden. Vorteilhafterweise die Oberschale 7 und die Unterschale 8 mittels Kleben miteinander gefügt, wodurch eine durchgängige und gleichmäßige Verbindungfläche 9 entsteht.

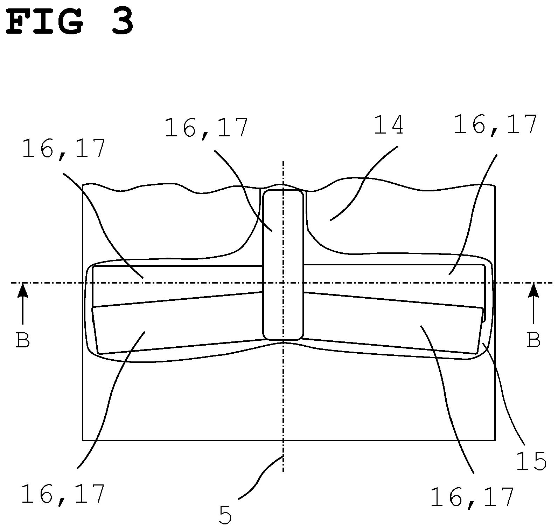

In Figur 3 ist eine schematische Darstellung eines Teilbereichs einer Werkzeugform 15 zur Herstellung der Oberschale 7 mit in die Werkzeugform 15 eingelegten Prepreg-Halbzeugen 16 im Bereich des Leitwerks 11 des Fluggerätgrundkörpers 1 in einer Draufsicht gezeigt. Durch ein Auskleiden der Werkzeugform 15 ist eine Form der Oberschale 7 und/oder der Unterschale 8 vorteilhafterweise reproduzierbar. Die eine oder die mehreren Lagen der Prepreg-Halbzeuge 16 können besonders gleichmäßig nebeneinander oder aufeinander angeordnet werden und besonders einfach an die Werkzeugform angepasst werden. Die Prepreg-Halbzeuge 16 bestehen aus mehreren unterschiedlichen vorgegebenen Zuschnitten 17. Unter Verwendung von großen Zuschnitten 17 können große Flächen der Werkzeugform 15 besonders schnell ausgekleidet werden und unter Verwendung von kleinen Zuschnitten 17 können bestimmte Bereiche der Werkzeugform 15 besonders genau ausgekleidet werden.

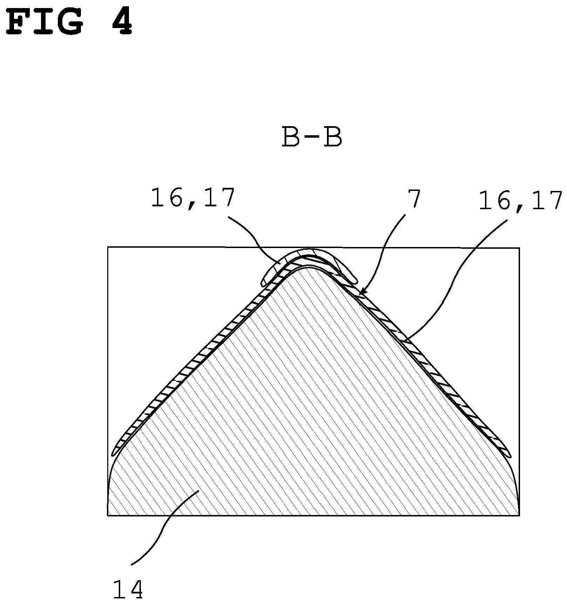

In Figur 4 ist eine schematische Darstellung der Werkzeugform 15 zur Herstellung der Oberschale 7 mit in die Werkzeugform 15 eingelegten Prepreg-Halbzeugen 16 im Bereich des Leitwerks 11 des Fluggerätgrundkörpers 1 in einer Schnittansicht entlang der in Figur 3 dargestellten Schnittlinie B-B gezeigt. Dabei wird die Form des Leitwerks 11 beziehungsweise der Leitflächen 13 durch das Auskleiden der Werkzeugform 15 nachgebildet. Um eine gewünschte Steifigkeit und/oder Festigkeit des Fluggerätgrundkörpers 1 herzustellen, ist es erfindungsgemäß vorgesehen, dass das Prepreg-Halbzeug 16 innerhalb des Zuschnitts unterschiedliche Dicken aufweist.

## Patentansprüche

1. Fluggerätgrundkörper (1) eines Fluggerätes aus faserverstärktem Verbundwerkstoff, wobei der Fluggerätgrundkörper (1) eine als länglichen Rumpf (3) ausgebildete Tragestruktur aufweist, wobei ein aus zwei Flügeln bestehendes Flügelpaar seitlich an dem länglichen Rumpf (3) angeordnet ist, wobei die Flügel (4) so ausgebildet sind, dass bei einer Horizontalflugbewegung in eine zu einer Längsachse (5) des Rumpfes (3) parallelen Horizontalflugrichtung eine Auftriebskraft für das Fluggerät (2) erzeugt wird, wobei an den Flügeln mehrere Aufnahmevorrichtungen für die Aufnahme von Antriebseinrichtungen ausgebildet sind, wobei der Fluggerätgrundkörper (1) aus einer Oberschale (7) und einer Unterschale (8) gebildet ist, wobei die Oberschale (7) und die Unterschale (8) entlang einer gemeinsamen Verbindungsfläche (9) miteinander verbunden sind, wobei an einem Heck (10) des Rumpfes (3) ein Leitwerk (11) angeordnet ist und wobei das Leitwerk (11) durch ein Leitwerkflächenpaar (12) ausgebildet ist, wobei Leitflächen (13) des Leitwerkflächenpaares in einer Horizontalflugrichtung V-förmig zueinander ausgerichtet sind, wobei die Oberschale (7) und die Unterschale (8) jeweils einstückig hergestellt ist, **dadurch gekennzeichnet, dass** die Leitflächen (13) unmittelbar an dem Heck (10) angeordnet sind und in das Heck (10) übergehen, sodass das Leitwerk (11) entweder ein Bestandteil der Oberschale (7) oder ein Bestandteil der Unterschale (8) darstellt.

2. Fluggerätgrundkörper (1) gemäß Anspruch 1, **dadurch gekennzeichnet, dass** die Oberschale (7) und die Unterschale (8) aus einem Faser-Kunststoff-Verbund hergestellt sind.

3. Fluggerätgrundkörper (1) gemäß einem der voranstehenden Ansprüche, **dadurch gekennzeichnet, dass** die Oberschale (7) und die Unterschale (8) so ausgestaltet sind und entlang der Verbindungsfläche (9) miteinander in Verbindung bringbar sind, dass durch die Oberschale (7) und durch die Unterschale (8) ein Innenvolumen (14) umschlossen wird, sodass der Fluggerätgrundkörper (1) als Hohlkörper ausgestaltet ist.

4. Verfahren zur Herstellung eines Fluggerätgrundkörpers (1) eines Fluggeräts (2) gemäß den Ansprüchen 1 bis 3, wobei der Fluggerätkörper durch eine Oberschale (7) und eine Unterschale (8) gebildet wird, wobei in einem Laminiervorgang eine Formgebung der Oberschale (7) und der Unterschale (8) durch Formung und Anordnung von einer oder mehreren Lagen eines aushärtbaren Materials nachgebildet wird, wobei in einem anschließenden Aushärtvorgang die eine oder die mehreren Schichten durch Hinzugabe von Druck und Temperatur ausgehärtet werden, wodurch die Oberschale (7) und die Unterschale (8) gebildet werden.

5. Verfahren gemäß Anspruch 4, **dadurch gekennzeichnet, dass** die Formgebung der Oberschale (7) und/oder der Unterschale (8) durch Auskleiden einer Werkzeugform (15) durch eine oder mehrere Lagen des aushärtbaren Materials erfolgt.

6. Verfahren gemäß einem der Ansprüche 4 oder 5, **dadurch gekennzeichnet, dass** das Laminat aus einer oder mehreren Lagen eines Prepreg-Halbzeugs (16) besteht.

7. Verfahren gemäß Anspruch 6, **dadurch gekennzeichnet, dass** die Prepreg-Halbzeuge (16) einen vorgegebenen Zuschnitt (17) aufweisen.

8. Verfahren gemäß Anspruch 7, **dadurch gekennzeichnet, dass** das Prepreg-Halbzeug (16) innerhalb des Zuschnitts (17) unterschiedliche Dicken aufweist.

9. Verfahren gemäß einem der Ansprüche 7 oder 8, **dadurch gekennzeichnet, dass** für festgelegte Bereiche der Oberschale (7) und der Unterschale (8) die Werkzeugform (15) in dem Laminiervorgang das Laminat durch für die jeweiligen festgelegten Bereichen passende vorgegebenen Zuschnitte (17) des Prepreg-Halbzeugs (16) ausgekleidet wird.

10. Verfahren gemäß einem der Ansprüche 4 bis 9, **dadurch gekennzeichnet, dass** der Aushärtvorgang in einem Autoklaven durchgeführt wird.

11. Verfahren gemäß einem der Ansprüche 4 bis 10, **dadurch gekennzeichnet, dass** die Oberschale (7) und die Unterschale (8) in einem dem Aushärtvorgang nachgelagerten Fügevorgang mittels eines Fügeverfahrens miteinander verbunden werden.

12. Verfahren gemäß einem der Ansprüche 4 bis 10, **dadurch gekennzeichnet, dass** die Oberschale (7) und die Unterschale (8) in einem dem Aushärtvorgang vorgelagerten Fügevorgang in einem nicht ausgehärteten Zustand zusammengefügt werden.

13. Verfahren gemäß eine der Ansprüche 4 bis 10, **dadurch gekennzeichnet, dass** in dem Laminiervorgang die einen oder mehreren Lagen des aushärtbaren Materials der Oberschale (7) und der Unterschale (8) innerhalb eines Überlappungsbereichs miteinander in Anlage bringbar sind, sodass in dem Aushärtvorgang die Oberschale (7) und die Unterschale (8) sich zu einem monolithischen Fluggerätgrundkörper (1) verbinden.

## Claims

1. Base body (1) of an aerial vehicle of an aerial vehicle made of fiber-reinforced composite material, wherein the base body (1) of the aerial vehicle comprises a supporting structure configured as an elongated fuselage (3), wherein a wing pair consisting of two wings is arranged laterally on the elongated fuselage (3), wherein the wings (4) are configured such that, during a horizontal flight movement in a horizontal flight direction parallel to a longitudinal axis (5) of the fuselage (3), a lift force for the aerial vehicle (2) is generated, wherein a plurality of receiving devices for receiving drive devices are formed on the wings, wherein the base body (1) of an aerial vehicle is formed from an upper shell (7) and a lower shell (8), wherein the upper shell (7) and the lower shell (8) are connected to one another along a common connecting surface (9), wherein an empennage (11) is arranged at a tail (10) of the fuselage (3), and wherein the empennage (11) is formed by an empennage surface pair (12), wherein stabilizing surfaces (13) of the empennage surface pair are aligned in a V-shape relative to one another in a horizontal flight direction, wherein the upper shell (7) and the lower shell (8) are each manufactured in one piece, **characterized in that** the stabilizing surfaces (13) are arranged directly on the tail (10) and merge into the tail (10), such that the empennage (11) constitutes either a component of the upper shell (7) or a component of the lower shell (8).

2. Base body (1) of an aerial vehicle according to claim 1, **characterized in that** the upper shell (7) and the lower shell (8) are made of a fiber-plastic composite.

3. Base body (1) of an aerial vehicle according to any one of the preceding claims, **characterized in that** the upper shell (7) and the lower shell (8) are configured such and can be brought into connection with one another along the connecting surface (9) such that an internal volume (14) is enclosed by the upper shell (7) and by the lower shell (8), such that the base body (1) of an aerial vehicle is configured as a hollow body.

4. Method for producing an base body (1) of an aerial vehicle of an aerial vehicle (2) according to claims 1 to 3, wherein the body of the aerial vehicle is formed by an upper shell (7) and a lower shell (8), wherein, in a laminating process, a shape of the upper shell (7) and of the lower shell (8) is reproduced by shaping and arranging one or more layers of a curable material, wherein, in a subsequent curing process, the one or the plurality of layers are cured by application of pressure and temperature, whereby the upper shell (7) and the lower shell (8) are formed.

5. Method according to claim 4, **characterized in that** the shaping of the upper shell (7) and/or of the lower shell (8) is carried out by lining a tool mold (15) with one or more layers of the curable material.

6. Method according to any one of claims 4 or 5, **characterized in that** the laminate consists of one or more layers of a prepreg semi-finished product (16).

7. Method according to claim 6, **characterized in that** the prepreg semi-finished products (16) have a predetermined cut-to-size blank (17).

8. Method according to claim 7, **characterized in that** the prepreg semi-finished product (16) has different thicknesses within the cut-to-size blank (17).

9. Method according to any one of claims 7 or 8, **characterized in that**, for defined regions of the upper shell (7) and of the lower shell (8), the tool mold (15) is lined in the laminating process with the laminate by means of predetermined cut-to-size blanks (17) of the prepreg semi-finished product (16) fitting the respective defined regions.

10. Method according to any one of claims 4 to 9, **characterized in that** the curing process is carried out in an autoclave.

11. Method according to any one of claims 4 to 10, **characterized in that** the upper shell (7) and the lower shell (8) are connected to one another by means of a joining method in a joining process downstream of the curing process.

12. Method according to any one of claims 4 to 10, **characterized in that** the upper shell (7) and the lower shell (8) are joined together in an uncured state in a joining process upstream of the curing process.

13. Method according to any one of claims 4 to 10, **characterized in that**, in the laminating process, the one or more layers of the curable material of the upper shell (7) and of the lower shell (8) can be brought into contact with one another within an overlap region, such that, in the curing process, the upper shell (7) and the lower shell (8) connect to form a monolithic base body (1) of an aerial vehicle.

## Revendications

1. Corps de base d'aéronef (1) d'un aéronef, réalisé en matériau composite renforcé de fibres, dans lequel le corps de base d'aéronef (1) présente une structure porteuse réalisée sous la forme d'un fuselage allongé (3), dans lequel une paire d'ailes composée de deux ailes est disposée latéralement sur le fuselage allongé (3), dans lequel les ailes (4) sont configurées de sorte que, lors d'un mouvement de vol horizontal dans une direction de vol horizontal parallèle à un axe longitudinal (5) du fuselage (3), une force de portance est générée pour l'aéronef (2), dans lequel plusieurs dispositifs de réception destinés à recevoir des dispositifs de propulsion sont formés sur les ailes, dans lequel le corps de base d'aéronef (1) est formé d'une coque supérieure (7) et d'une coque inférieure (8), dans lequel la coque supérieure (7) et la coque inférieure (8) sont reliées l'une à l'autre le long d'une surface de liaison commune (9), dans lequel un empennage (11) est disposé sur une partie arrière (10) du fuselage (3), et dans lequel l'empennage (11) est formé par une paire de surfaces stabilisatrices (12), dans lequel les surfaces stabilisatrices (13) de la paire de surfaces stabilisatrices sont orientées en forme de V l'une par rapport à l'autre dans une direction de vol horizontal, dans lequel la coque supérieure (7) et la coque inférieure (8) sont chacune fabriquées d'une seule pièce, **caractérisé en ce que** les surfaces stabilisatrices (13) sont disposées directement sur la partie arrière (10) et se prolongent dans la partie arrière (10), de sorte que l'empennage (11) constitue soit un élément constitutif de la coque supérieure (7), soit un élément constitutif de la coque inférieure (8).

2. Corps de base d'aéronef (1) selon la revendication 1, **caractérisé en ce que** la coque supérieure (7) et la coque inférieure (8) sont fabriquées à partir d'un composite polymère renforcé de fibres.

3. Corps de base d'aéronef (1) selon l'une quelconque des revendications précédentes, **caractérisé en ce que** la coque supérieure (7) et la coque inférieure (8) sont configurées de telle sorte et peuvent être mises en liaison l'une avec l'autre le long de la surface de liaison (9) de telle sorte qu'un volume intérieur (14) est enfermé par la coque supérieure (7) et par la coque inférieure (8), de sorte que le corps de base d'aéronef (1) est configuré comme un corps creux.

4. Procédé de fabrication d'un corps de base d'aéronef (1) d'un aéronef (2) selon les revendications 1 à 3, dans lequel le corps d'aéronef est formé par une coque supérieure (7) et une coque inférieure (8), dans lequel, lors d'une opération de stratification, une mise en forme de la coque supérieure (7) et de la coque inférieure (8) est reproduite par façonnage et agencement d'une ou plusieurs couches d'un matériau durcissable, dans lequel, lors d'une opération de durcissement subséquente, la ou les couches sont durcies par application de pression et de température, ce par quoi la coque supérieure (7) et la coque inférieure (8) sont formées.

5. Procédé selon la revendication 4, **caractérisé en ce que** la mise en forme de la coque supérieure (7) et/ou de la coque inférieure (8) est réalisée par garnissage d'un moule d'outillage (15) au moyen d'une ou plusieurs couches du matériau durcissable.

6. Procédé selon l'une quelconque des revendications 4 ou 5, **caractérisé en ce que** le stratifié se compose d'une ou plusieurs couches d'un produit semi-fini préimprégné (16).

7. Procédé selon la revendication 6, **caractérisé en ce que** les produits semi-finis préimprégnés (16) présentent une découpe prédéfinie (17).

8. Procédé selon la revendication 7, **caractérisé en ce que** le produit semi-fini préimprégné (16) présente différentes épaisseurs à l'intérieur de la découpe prédéfinie (17).

9. Procédé selon l'une quelconque des revendications 7 ou 8, **caractérisé en ce que**, pour des zones déterminées de la coque supérieure (7) et de la coque inférieure (8), le moule d'outillage (15), lors de l'opération de stratification, est garni avec le stratifié au moyen de découpes prédéfinies (17) du produit semi-fini préimprégné (16) adaptées aux zones déterminées respectives.

10. Procédé selon l'une quelconque des revendications 4 à 9, **caractérisé en ce que** l'opération de durcissement est effectuée dans un autoclave.

11. Procédé selon l'une quelconque des revendications 4 à 10, **caractérisé en ce que** la coque supérieure (7) et la coque inférieure (8) sont reliées l'une à l'autre au moyen d'un procédé d'assemblage lors d'une opération d'assemblage postérieure à l'opération de durcissement.

12. Procédé selon l'une quelconque des revendications 4 à 10, **caractérisé en ce que** la coque supérieure (7) et la coque inférieure (8) sont assemblées à l'état non durci lors d'une opération d'assemblage antérieure à l'opération de durcissement.

13. Procédé selon l'une quelconque des revendications 4 à 10, **caractérisé en ce que**, lors de l'opération de stratification, la ou les couches du matériau durcissable de la coque supérieure (7) et de la coque inférieure (8) peuvent être amenées en contact les unes avec les autres à l'intérieur d'une zone de chevauchement, de sorte que, lors de l'opération de durcissement, la coque supérieure (7) et la coque inférieure (8) se lient pour former un corps de base d'aéronef (1) monolithique.
